# EUROPÄISCHE PATENTANMELDUNG

(11) **EP 3 121 372 A1**
(43) Veröffentlichungstag der Anmeldung: **25.01.2017**
(21) Anmeldenummer: 16176167.1
(22) Anmeldetag: 24.06.2016
(51) Int. Cl.: F01D 5/08, F01D 5/30

(54) **GEKÜHLTES TURBINENLAUFRAD FÜR EIN FLUGTRIEBWERK**

(30) Priorität: 20.07.2015 DE 102015111750
(71) Anmelder: Rolls-Royce Deutschland Ltd & Co KG, 15827 Blankenfelde-Mahlow (DE)
(72) Erfinder: Weinert, Markus, 15834 Rangsdorf (DE); Leymann, Tobias, 14059 Berlin (DE)
(74) Vertreter: Kronthaler, Wolfgang N.K.

(57) **Zusammenfassung**

Es wird ein gekühltes Turbinenlaufrad (3) für eine Gasturbine, insbesondere ein Flugtriebwerk, mit an einer Umfangsfläche einer Rotorscheibe (4) radial angeordneten Turbinenschaufeln (7) vorgeschlagen, wobei jeweils eine Turbinenschaufel (7) mit einem profilierten Schaufelfuß (8) in eine korrespondierend profilierte Scheibenfingernut (6) an der Umfangsfläche der Rotorscheibe (4) eingesetzt ist. Es ist eine Kühleinrichtung (15) mit mindestens einem sich zumindest im Wesentlichen axial und wenigstens über einen Teil der axialen Länge des Schaufelfußes (8) erstreckenden Kühlluftzuführkanal vorgesehen, welcher wenigstens einen Einlass (34, 35) an einer Anströmseite (8B) des Schaufelfußes (8) mit einer Einlassöffnung (36, 37) aufweist, wobei der Einlass (34, 35) mit einer Vorkragung (30, 31) ausgeführt ist. Eine Mittelachse (38, 40) des Einlasses (34, 35) weist in einer der Einlassöffnung (36, 37) zugewandten Richtung im Bereich der Einlassöffnung (36, 37) eine Erstreckungskomponente in Rotationsrichtung (ω) der Rotorscheibe (4) auf.

## Beschreibung

Die Erfindung betrifft ein gekühltes Turbinenlaufrad, insbesondere ein Mitteldruck- oder Hochdruckturbinenlaufrad, für ein Flugtriebwerk, bei dem gemäß den Merkmalen des Oberbegriffs des Patentanspruchs 1 eine Kühleinrichtung vorgesehen ist, welche zumindest einen sich wenigstens im Wesentlichen axial und wenigstens über einen Teil der axialen Länge eines Schaufelfußes einer Turbinenschaufel erstreckenden Kühlluftzuführkanal umfasst.

Bei bekannten Turbinenlaufrädern bzw. Rotoren mit gekühlten Hochdruckturbinenschaufeln wird eine Versorgung von Kühlluftkanälen der Turbinenschaufeln über vorwiegend radial im Inneren der Turbinenschaufeln angeordnete Kanäle erreicht. Den Hochdrucklaufschaufeln zur Kühlung zugeführte Sekundärluft strömt dabei aus einer Kavität vor dem Turbinenlaufrad durch axiale Kanäle, die beispielsweise zwischen einem Schaufelfuß und einer Rotorscheibe gebildet sind und auch als bucket-groove bezeichnet werden, von denen sich die radial in die Laufschaufeln erstreckenden Kühlkanäle abzweigen. Die hierbei den Kühlluftkanälen des Turbinenlaufrads zugeführte Kühlluft ist in der Regel mit Drall behaftet und tritt meist nicht in einem vorteilhaften Winkel auf einen Einlass in die axialen Kühlluftkanäle auf. Hieraus resultieren Druckverluste, die die Möglichkeit der Kühlung der Hochdruckturbinenlaufschaufeln beispielsweise als Filmkühlung stark einschränken. Dies kann beispielsweise dazu führen, dass der Performance-Cycle des Flugtriebwerks beschränkt wird.

Aus den Druckschriften DE 103 32 561 A1, EP 1 004 748 und EP 1 464 792 B1 sind Turbinenlaufräder mit unterschiedlichsten Ausgestaltungen von Kühlluftzuführkanälen bekannt. All diesen Lösungen ist das Bestreben gemeinsam, die Turbinenschaufeln mit einer dem Turbinenlaufrad zugeführten Hochdruckkühlluft möglichst effektiv zu kühlen, um die Wärmebelastung der Turbinenschaufeln zu minimieren und eine möglichst hohe Lebensdauer zu gewährleisten. Bevorzugt wird dabei, wie z. B. in der DE 103 32 561 A1 ersichtlich, der Bereich der Turbinenschaufelaufnahme am Scheibenkranz der Rotorscheibe eines Turbinenlaufrads so gestaltet, dass zwischen einem Schaufelfuß einer Turbinenschaufel und einer Fingerscheibennut zwischen Scheibenfingern der Rotorscheibe, welche die Turbinenschaufel halten, ein schlitzartiger Kühlluftzuführkanal verbleibt, durch den ein Kühlluftstrom in vorwiegend axialer Richtung der Turbinenschaufel geführt wird und von dem radiale Kühlkanäle in ein Schaufelprofil der Turbinenschaufel abzweigen.

Der für eine effiziente Kühlung der Turbinenschaufeln in der jeweiligen Schaufel zur Verfügung stehende Druck wird jedoch insbesondere bei einem mit Drall in den Kühlluftzuführkanal eintretenden Kühlluftstrom bei allen diesen bekannten Lösungen aufgrund der großen Druckverluste am Eintritt in den Kühlluftzuführkanal erheblich reduziert, womit auch die Kühlung in den Turbinenschaufeln sowie im Scheibenkranz und mithin die Lebensdauer der Turbinenschaufel wie des gesamten Turbinenlaufrades im Triebwerk beeinträchtigt wird.

Aus der US 4,178,129 A ist ein Kühlsystem für Turbinenlaufräder von Gasturbinentriebwerken mit einem Dralldüsenkranz bekannt, der im Sinne der Erzeugung einer auf die ihm zugewandte Stirnseite des Turbinenlaufrads gerichteten, drallbehafteten und umfangsmäßig im Wesentlichen ununterbrochenen ringförmigen Kühlluftströmung ausgebildet ist. Das Kühlsystem weist einen an der Stirnseite des Turbinenlaufrads gebildeten Kranz von Kühlluftaufnehmern auf, welche dem Dralldüsenkranz zugewandt sind und in den Turbinenlaufschaufeln gebildete Kühlkanäle speisen. Die Kühlluftaufnehmer sind dabei als einzeln zum Dralldüsenkranz hin von der Stirnseite des Turbinenlaufrads wegragende Pitotrohr-Aufnehmer ausgebildet.

Eine effektive Kühlung einer derartigen Ausführung ist dabei von der Position und der Ausrichtung der Düsen des Dralldüsenkranzes bzw. der Vorleitdüsen abhängig, wobei der Versorgungsdruck der Turbinenlaufschaufel mit zugeführter Sekundärluft gegebenenfalls zu gering ist und beispielsweise durch ein erforderliche Umlenkung der Sekundärluft hohe Druckverluste bei der Leitung der Sekundärluft zu dem Schaufelblatt auftreten können.

Der Erfindung liegt die Aufgabe zugrunde, ein gekühltes Turbinenlaufrad für ein Flugtriebwerk der eingangs näher bezeichneten Art derart auszubilden, dass mit geringem Aufwand eine effektive Kühlung der Turbinenschaufeln und des Scheibenkranzes und damit eine lange Lebensdauer des Turbinenlaufrades unabhängig von der Position und Ausrichtung einer Vordralldüse, auch Pre-Swirl Nozzle genannt, gewährleistet ist.

Erfindungsgemäß wird die Aufgabe mit einem gemäß den Merkmalen des Patentanspruchs 1 ausgebildeten Turbinenlaufrad gelöst.

Es ist mithin ein gekühltes Turbinenlaufrad für ein Flugtriebwerk, mit an einer Umfangsfläche einer Rotorscheibe radial angeordneten Turbinenschaufeln vorgesehen, wobei jeweils eine Turbinenschaufel mit einem profilierten Schaufelfuß in eine korrespondierend profilierte Scheibenfingernut an der Umfangsfläche der Rotorscheibe eingesetzt ist, und wobei eine Kühleinrichtung mit mindestens einem sich zumindest im Wesentlichen axial und wenigstens über einen Teil der axialen Länge des Schaufelfußes erstreckenden Kühlluftzuführkanal vorgesehen ist, welcher einen Einlass an einer Anströmseite des Schaufelfußes mit einer Einlassöffnung aufweist, wobei der Einlass mit einer Vorkragung ausgeführt ist. Hierbei wird erfindungsgemäß vorgeschlagen, dass eine Mittelachse des Einlasses in einer der Einlassöffnung zugewandten Richtung im Bereich der Einlassöffnung eine Erstreckungskomponente in Rotationsrichtung der Rotorscheibe aufweist.

Die erfindungsgemäße Ausführung des Turbinenlaufrads hat den Vorteil, dass durch die vorgeschlagene Ausführung der Vorkragung eingangsseitig des Kühlluftzuführkanals eine effiziente Turbinenschaufelkühlung auch dann erzielt wird, wenn ein Kühlluftstrom vorliegt, dessen Umfangskomponente geringer ist als die des Rotors. Dies wird dadurch erreicht, dass die Einlassöffnung durch die erfindungsgemäße Ausrichtung des Einlasses einer Kühlluftströmung zugewandt ist und somit auch ein mit einem relativen Drall behafteter, entgegen der Drehrichtung der Rotorscheibe durch die Einlassöffnung eintretender Kühlluftstrom trotz drallbedingter Druckverluste für eine zufriedenstellende Kühlung der Turbinenschaufeln bzw. der Rotationsscheibe ausreichend ist.

Durch die Reduzierung der Druckverluste wird somit auf einfache Weise eine effiziente Innenkühlung der jeweiligen Turbinenschaufel ermöglicht, wobei auch in Bereichen mit großem Gegendruck, die mit herkömmlichen Kühlsystemen nur sehr schwer zu kühlen sind, Kühlluft ausgeblasen werden kann. Die Lebensdauer der Turbinenschaufeln und der Rotationsscheibe des Turbinenlaufrades können damit deutlich erhöht werden, wobei auch die Effektivität der Schaufelkühlung verbessert ist.

Unter einer Vorkragung wird hier im weitesten Sinne jede Art von Vorsprung oder Vorsatz verstanden, wobei die Vorkragung sowohl an einem separaten Bauteil als auch integral mit der Turbinenschaufel ausgeführt sein kann. Die Vorkragung weist dabei insbesondere eine größere Erstreckung entgegen einer Strömungsrichtung von Arbeitsfluid bzw. Sekundärluft in einem Ringkanal als die Scheibenfinger der Rotorscheibe in einem radialen Bereich, in dem die Vorkragung angeordnet ist, auf.

Es kann hierbei vorgesehen sein, dass eine Turbinenschaufel im Bereich ihres Schaufelfußes eine oder mehrere Vorkragungen aufweist, die in radialer Richtung insbesondere zueinander beabstandet sind.

Bei einer vorteilhaften Ausführung des erfindungsgemäßen Turbinenlaufrads ist es vorgesehen, dass die Vorkragung an einer in Strömungsrichtung dem Schaufelfuß vorgesetzten Scheibeneinrichtung ausgebildet ist, die insbesondere in Anlage an dem Schaufelfuß gehalten ist. Mit einer derartigen Ausführung sind die die Einlässe bildenden Vorkragungen auf einfache Weise konstruktiv ausbildbar und flexibel gestaltbar. Die Scheibeneinrichtung kann dabei auf vielfältige Weise lösbar oder unlösbar mit einer Turbinenschaufel oder mehreren Turbinenschaufeln und/oder der Rotorscheibe verbunden sein.

Die Scheibeneinrichtung kann dabei sowohl als eine einen vollen Ring bildende Abdeckplatte als auch in Umfangsrichtung mit mehreren Segmenten ausgeführt sein, wobei bei letzterer Ausführung insbesondere jedem Segment wenigstens eine Turbinenschaufel zugeordnet ist. Es kann auch vorgesehen sein, dass ein Segment mehreren Turbinenschaufeln zugeordnet ist, wobei die Segmente bevorzugt in montiertem Zustand einen insbesondere komplett umlaufenden Scheibenring bilden.

Bei einer bevorzugten Ausführung der Erfindung ist vorgesehen, dass die Scheibeneinrichtung mehrere einer Turbinenschaufel zugeordnete Einlässe aufweist. Hierdurch ist ebenso wie bei einer Ausführung der Vorkragungen integral mit der Turbinenschaufel eine besonders günstige Kühlluftversorgung der Turbinenschaufel erzielbar.

Von besonderer Wichtigkeit ist die konstruktive Gestaltung der Abströmseite der Vorkragungen, um die Entstehung von Turbulenzen so weit wie möglich zu verhindern.

Im Prinzip ist jede im Zusammenhang mit der Erfindung aufgezeigte Lösung mit einer eine Vorkragung mit einem Kühllufteinlass bildenden Scheibeneinrichtung auch unabhängig von der Ausrichtung der Mittelachse des Einlasses vorteilhaft.

Eine gewünschte Kühlung der Turbinenschaufeln ist auf einfache Weise erzielbar, wenn von dem im Wesentlichen axialen Kühlluftzuführkanal mindestens ein sich im Inneren der Turbinenschaufel bis zu einer Austrittsöffnung an deren Oberfläche erstreckender Kühlkanal abzweigt, wobei insbesondere wenigstens ein Kühlkanal mit einem Einlass verbunden ist. Vorzugsweise weist eine Turbinenschaufel drei derartige Kühlkanäle auf, wobei auch weniger oder mehr Kühlkanäle je nach Anwendungsfall vorgesehen sein können.

Dabei können insbesondere drei bzw. alle Kühlkanäle mit einem Einlass verbunden sein. Alternativ hierzu können auch ein erster und ein zweiter Kühlkanal mit einem Einlass und ein dritter Kühlkanal mit einem separaten Einlass verbunden sein. Grundsätzlich kann allerdings die Anzahl der mit einem Einlass kombinierten Kühlkanäle je nach Anwendungsfall variieren.

Alternativ oder zusätzlich zu einer Ausführung eines Segments der Scheibeneinrichtung mit mehreren Einlässen für eine Turbinenschaufel kann es auch vorgesehen sein, dass ein Segment der Scheibeneinrichtung mehrere Einlässe benachbarter Turbinenschaufeln aufweist. Hierdurch können die Segmente eine größere Erstreckung in Umfangsrichtung aufweisen, wodurch beispielsweise eine Montage erleichtert werden kann und eine verbesserte Abdichtung vorliegt.

Bei einer vorteilhaften Ausführung eines erfindungsgemäßen Turbinenlaufrads ist es vorgesehen, dass die Scheibeneinrichtung integral mit einer Dichteinrichtung ausgeführt ist, welche im Einbauzustand zwischen in axialer Richtung benachbarten Turbinenleit- und Turbinenlaufrädern bzw. zwischen Stator- und Rotorvorrichtungen angeordnet ist. Eine derartige Dichteinrichtung kann beispielsweise eine sogenannte Labyrinthdichtung, eine Abdichtleiste am Scheibenkranz oder ein Zwischenstufendichtelement darstellen.

Einander zugewandte Seiten der Scheibeneinrichtung und der Turbinenschaufel sind bevorzugt jeweils plan ausgeführt, so dass sie auf einfache Weise miteinander in eine Druckverluste vermeidende Wirkverbindung bringbar sind.

Vor allem in Hinblick auf eine mit Drall anströmende Kühlluft kann es vorteilhaft sein, wenn der Einlass im Bereich der Vorkragung in Strömungsrichtung horizontal eine Krümmung aufweist, wobei eine Mittelachse im Bereich des Einlasses eines einen Drall aufweisenden Kühlluftstromes wenigstens annähernd gleichgerichtet zu der Kühlluftanströmrichtung ist und nach der Krümmung im Wesentlichen in Axialerstreckung des Kühlluftzuführkanals ausgerichtet ist. Mit der Krümmung kann der Eintritt des Kühlluftstroms flach mit der Anströmseite der Turbinenschaufel und der Rotorscheibe ausgestaltet sein, so dass der Kühlluftstrom auch bei einem Drall mit besonders geringem Druckverlust in den Einlass eintritt. Die Kühlluftanströmrichtung kann dabei im Relativsystem in Umfangsrichtung der Rotorscheibe im Wesentlichen entgegengesetzt zur Rotationsrichtung der Rotationsscheibe sein.

Bei einer vorteilhaften Ausführung des erfindungsgemäßen Turbinenrads ist es vorgesehen, dass der Einlass im Bereich der Vorkragung NACA-förmig ausgebildet ist, wobei der Einlass hierbei in Umfangsrichtung des Turbinenrads insbesondere von zwei Seitenflächen begrenzt ist, deren Abstand sich entgegen der Drehrichtung der Rotorscheibe in radialer Richtung vergrößert. Hierbei wird eine dem Kühlluftdurchlass zugeführte Strömung vorteilhafterweise lediglich in geringem Umfang gestört. Zwischen den Seitenflächen kann der Lufteinlass dabei insbesondere von einem rampenförmig ausgeführten Bereich gebildet sein.

Neben der Ausführung des Einlasses als sogenannter flacher NACA-Einlass bzw. "submerged inlet", bei dem eine Flanke im Querschnitt insbesondere eine Gerade bildet und die andere Flanke gekrümmt ausgeführt ist, kann der Einlass alternativ hierzu wie auch bei den zuvor aufgezeigten Ausführungsmöglichkeiten in der Art eines Inlet-Scoops oder bildlich ausgedrückt in der Art eines Baseballhandschuhs ausgeführt sein. Bei jeder dieser Einlassformen werden Eintrittsverluste minimiert.

Wenn der Einlass im Bereich der Vorkragung eine sich in Strömungsrichtung diffusorartig erweiternde Kanalquerschnittsfläche aufweist, wird hierbei insbesondere ein Mikrokompressor gebildet, durch den vorteilhafterweise eine effiziente Turbinenschaufelkühlung mit Erhöhung des statischen Druckes erzielt wird. Auch ein mit einem relativen Drall entgegen der Drehrichtung der Rotorscheibe in den Kühlluftkanal eintretender Kühlluftstrom ist hierbei trotz drallbedingter Druckverluste für eine zufriedenstellende Kühlung der Turbinenschaufeln ausreichend. Der hierdurch erzielbare zusätzliche Kühlstromstaudruckgewinn im Bereich des Einlasses ermöglicht eine weiter verbesserte Innenkühlung der jeweiligen Turbinenschaufel, wobei dadurch auch in Bereichen mit hohem Gegendruck Kühlluft ausgeblasen werden kann. Die Lebensdauer der Turbinenschaufeln und der Rotationsscheibe des Turbinenlaufrades können damit erhöht werden.

Die geometrische Gestaltung des Mikrokompressors erfolgt zweckmäßigerweise so, dass die aerodynamische Eintrittsfläche im Auslegungspunkt auf die Relativgeschwindigkeit der Anströmung optimiert ist, und damit eine weitestgehend verlustfreie Einströmung in den Mikrokompressor erfolgen kann. Die im Mikrokompressor stattfindende Verlangsamung der Strömungsgeschwindigkeit sorgt für einen stetigen Anstieg des statischen Druckes, der letztlich zu einem verbesserten Kühlsystem führt.

Bei einer durch geringe Strömungsverluste in Umfangsrichtung aufweisenden Ausführung der Erfindung kann es vorgesehen sein, dass die Scheibeneinrichtung zwischen zwei in Umfangsrichtung beabstandeten Einlässen auf ihrer dem Schaufelfuß abgewandten Seite ein die benachbarten Kanten der Einlässe insbesondere wellenartig verbindendes Profil aufweist. Ein solches wellenartiges Profil ist ebenfalls bei der Schaufel einsetzbar.

Durch eine entsprechende Gestaltung des Profils kann eine günstige Luftzuführung zu den Einlässen erreicht werden, wobei Verwirbelungen im Bereich der Kanten bzw. zwischen den benachbarten Einlässen reduziert und vorteilhafterweise vermieden werden können. Das Profil kann stromab der Kante vorzugsweise niveaunivelliert zu dem die Kante aufweisenden Bereich ausgeführt sein bzw. ein Bereich zwischen den Kanten benachbarter Einlässe kann durch das Profil derart ausgefüllt sein, dass in diesem Bereich nur sehr geringe oder keine Verwirbelungen auftreten. Hierdurch wird ein Druckverlust vermieden, der zu einer reduzierten Kühlung führen könnte. Das Profil kann dabei hinsichtlich Form, Orientierung und Lage dem jeweiligen Anwendungsfall entsprechend ausgeführt werden.

Im Zusammenhang mit - wie auch unabhängig von - der wellenartigen Profilgestaltung kann das Profil der anströmseitigen Oberfläche im Wesentlichen in Umfangsrichtung der Turbinenvorrichtung im Bereich der Einlässe, zwischen diesen sowie unterhalb oder oberhalb dieser, verlaufende gebogene Nuten und/oder Stege aufweisen, um eine Strömungsführung zwischen den Einlässen in gewünschtem Umfang zu verbessern.

Wenn die Scheibeneinrichtung wenigstens einen in radialer Richtung vorstehenden Absatz aufweist, mittels welchem wenigstens eine Turbinenschaufel in axialer Richtung an der Rotorscheibe gesichert ist, kann die Scheibeneinrichtung neben der axialen Sicherung der Turbinenschaufel an der Rotorscheibe auch einfach in ihrer radialen Position gehalten werden.

Es kann dabei vorgesehen sein, dass in einem in radialer Richtung inneren Bereich der Scheibeneinrichtung ein Absatz vorgesehen ist, mittels welchem die Scheibeneinrichtung an der Rotorscheibe halterbar ist. Alternativ oder zusätzlich kann in einem in radialer Richtung äußeren Bereich der Scheibeneinrichtung ein Absatz vorgesehen ist, mittels welchem die Scheibeneinrichtung in Eingriff mit wenigstens einer Turbinenschaufel bringbar ist.

Neben den genannten Merkmalskombinationen sind sowohl die in den Patentansprüchen angegebenen Merkmale als auch die in dem nachfolgenden Ausführungsbeispiel angegebenen Merkmale jeweils für sich alleine oder in beliebiger Kombination miteinander geeignet, den erfindungsgemäßen Gegenstand auszubilden.

Weitere Vorteile und Ausführungsmöglichkeiten eines erfindungsgemäß gekühlten Turbinenlaufrads ergeben sich ebenfalls aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine vereinfachte Ansicht eines Ausschnitts einer Hochdruckturbine eines Flugtriebwerks, wobei ein Turbinenleitrad und ein gekühltes Turbinenlaufrad, das eine Rotorscheibe und umfangsseitig daran angeordnete Turbinenschaufeln aufweist, näher ersichtlich sind;
- Fig. 2: eine perspektivische Ansicht eines Scheibenkranzbereichs des Turbinenlaufrads der Fig. 1, wobei ausschnittsweise eine mit einer Kühleinrichtung versehene, zwischen Scheibenfingern der Rotorscheibe gehaltene Turbinenschaufel ersichtlich ist, und wobei im Bereich einer Anströmseite eines Schaufelfußes einer Turbinenschaufel Einlässe für Kühlluft mit Vorkragungen näher gezeigt sind;
- Fig. 3: eine schematisierte Schnittdarstellung entlang der Linie X-X in Fig. 2, wobei ein sich in dem Schaufelfuß im Wesentlichen in axialer Richtung erstreckender Kühlluftzuführkanal ersichtlich ist, der sich an den Einlass anschließt;
- Fig. 4: eine vereinfachte perspektivische Ansicht eines alternativ ausgeführten Turbinenlaufrads, wobei Vorkragungen an einer als Vollring ausgeführten an der Rotorscheibe gehaltenen Scheibeneinrichtung ausgebildet sind;
- Fig. 5: eine vereinfachte Schnittdarstellung durch die Schaufelfüße von drei in Umfangsrichtung nebeneinander angeordneten Turbinenschaufeln entlang der Linie B-B in Fig. 4;
- Fig. 6: eine der Fig. 4 entsprechende Ansicht eines alternativ ausgeführten Turbinenlaufrads, wobei eine mit mehreren Segmenten ausgeführte Scheibeneinrichtung gezeigt ist;
- Fig. 7: eine vereinfachte Schnittdarstellung durch die Schaufelfüße von zwei in Umfangsrichtung nebeneinander angeordneten Turbinenschaufeln entlang der Linie C-C in Fig. 6;
- Fig. 8: eine vereinfachte Seitenansicht eines Ausschnitts einer Turbinenschaufel und eines Segments der Scheibeneinrichtung gemäß Fig. 6 und Fig. 7, wobei das Segment zur axialen Sicherung der Turbinenschaufel über einen Absatz in einer Nut der Turbinenschaufel gehalten ist;
- Fig. 9: eine vereinfachte perspektivische Ansicht eines Ausschnitts eines weiteren alternativ ausgeführten Turbinenlaufrads, wobei eine Scheibeneinrichtung mit mehreren Segmenten vorgesehen ist; und
- Fig. 10: eine vereinfachte Schnittdarstellung durch die Schaufelfüße von zwei in Umfangsrichtung nebeneinander angeordneten Turbinenschaufeln entlang der Linie D-D in Fig. 9.

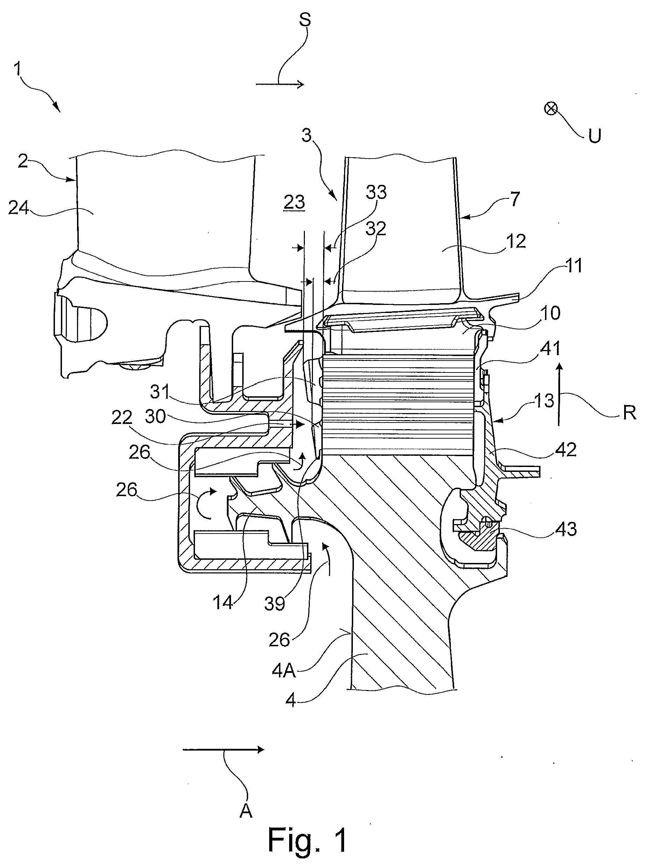

Bezug nehmend auf Fig. 1 bis Fig. 3 sind unterschiedliche Ausschnitte und Ansichten einer Hochdruck- bzw. Mitteldruck-Turbinenvorrichtung 1 eines Flugtriebwerks mit einem Turbinenleitrad 2 und einem Turbinenlaufrad 3 in einer ersten Ausführungsform ersichtlich. Das Turbinenlaufrad 3 weist eine Rotorscheibe 4 auf, an deren durch einen Scheibenkranz gebildeter Umfangsfläche profilierte Scheibenfinger 5 ausgebildet sind.

In dem zwischen den Scheibenfingern 5 verbleibenden, eine Scheibenfingernut 6 bildenden Raum ist jeweils eine Turbinenschaufel 7 mit einem Schaufelfuß 8 gehalten, welcher entsprechend den profilierten Scheibenfingern 5 ein tannenbaumförmiges Profil 9 aufweist. Radial nach außen schließen sich an den Schaufelfuß 8 der Turbinenschaufel 7 ein Schaufelhals 10, eine Schaufelplattform 11, ein eine Druck- und Saugseite aufweisendes Schaufelprofil 12 und schließlich ein nicht näher ersichtliches Schaufeldeckband an. Gegen eine axiale Verschiebung sind die Turbinenschaufeln 7 vorliegend durch eine geeignet gestaltete und sowohl an den Turbinenschaufeln 7 als auch an der Rotorscheibe 4 gehaltene Sicherungseinrichtung 13 gesichert. Die Sicherungseinrichtung 13 ist vorliegend in radialer Richtung R der Turbinenvorrichtung 1 mehrteilig von außen nach innen betrachtet mit Sicherungssegmenten 41, einem Dichtelement 42 und einem Sprengring 43 ausgeführt.

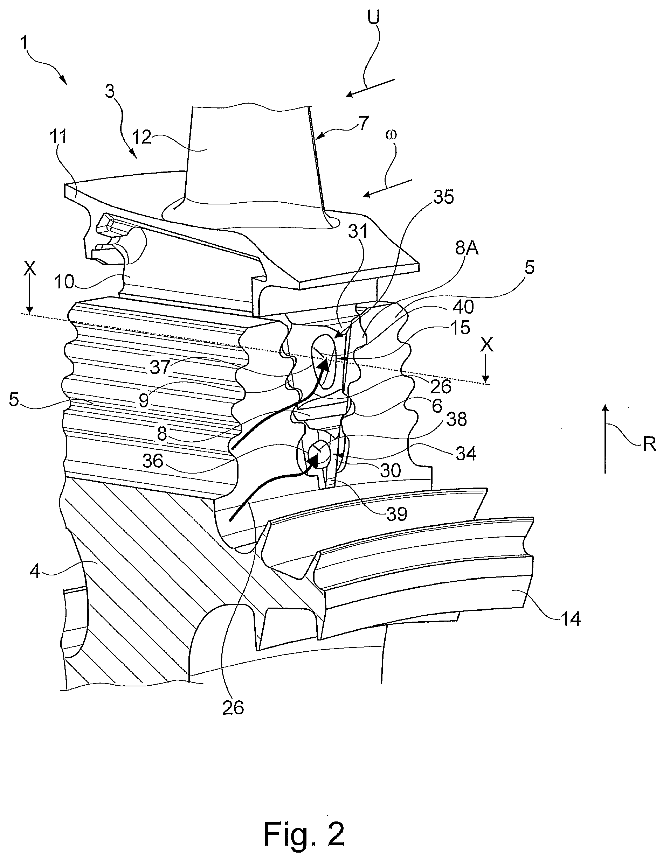

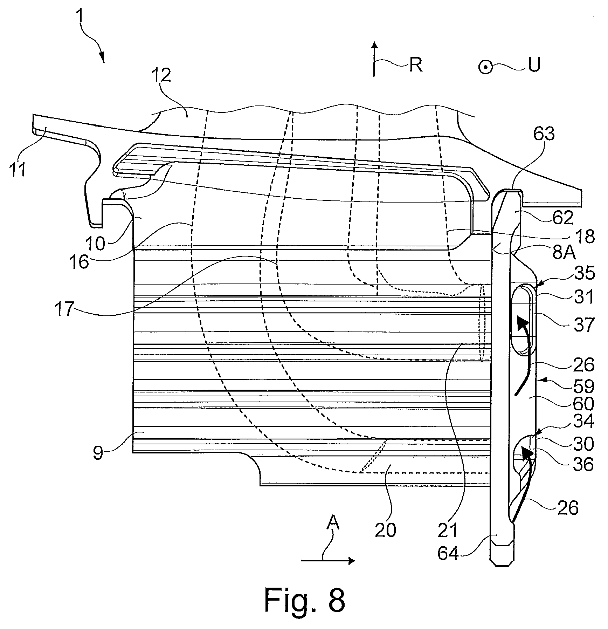

Im Innern der Turbinenschaufeln 7 befinden sich analog zu der Darstellung gemäß Fig. 8 mehrere, vorliegend drei mit Kühlluft beaufschlagte Kühlkanale 16, 17, 18 einer Kühleinrichtung 15 gemäß Fig. 2, welche sich ausgehend von dem Schaufelfuß 6 in radialer Richtung nach außen und ggf. zusätzlich in Querrichtung bis zu Austrittsöffnungen beispielsweise in Form von Filmkühlungsbohrungen an der Oberfläche von wärmebelasteten Bereichen der Turbinenschaufel 7 erstrecken.

Mit Kühlluft gespeist werden die Kühlkanäle 16, 17, 18, wie insbesondere der Fig. 8 zu entnehmen ist, vorliegend über zwei Kühlluftzuführkanäle 20, 21 der Kühleinrichtung 15, welche sich im Wesentlichen in axialer Richtung A des Schaufelfußes 8 über einen Bereich der axialen Länge des Schaufelfußes 8 erstrecken und in radialer Richtung R der Turbinenvorrichtung 1 zueinander beabstandet in dem Schaufelfuß 8 angeordnet sind. Vorliegend ist dabei ein radial innerer bzw. innen liegender Kühlluftzuführkanal 20 mit dem stromabseitigen Kühlkanal 16 verbunden, wohingegen der radial außen liegende Kühlluftzuführkanal 21 mit den einer Anströmseite 8A des Schaufelfußes zugewandten Kühlkanälen 17 und 18 verbunden ist, in deren Bereich der höchste Gegendruck vorliegt.

Das Turbinenlaufrad 1 ist bei der gezeigten Ausführung eine sogenannte Stufe-II-Laufscheibe einer zweiten Stufe einer Hochdruck-Axialturbine eines Flugtriebwerkes, welche in einem Ringkanal 23 in Strömungsrichtung betrachtet nach Leitschaufeln 24 des Turbinenleitrads 2 angeordnet ist. Die an dem Turbinenlaufrad 1 gezeigte Gestaltung der Kühleinrichtung 15 ist grundsätzlich unabhängig von einer bestimmten Stufenposition einsetzbar.

Bei dem vorliegenden Ausführungsbeispiel wird Kühlluft aus einer Vordralldüse bzw. Pre-Swirl-Nozzle 22 des Turbinenleitrads 2 sowie ein durch Pfeile 26 angedeuteter Kühlluftstrom bzw. Sekundärluftstrom, welcher zunächst eine als Labyrinthringdichtung, welche auch als Abdichtleiste oder Zwischenstufendichtelement bezeichnet wird, ausgeführte Dichteinrichtung 14 am Scheibenkranz der Rotorscheibe 4 durchtritt, an die den Leitschaufeln 24 zugewandte Stirnfläche bzw. Anströmseite 8A des Schaufelfußes 8 der Turbinenschaufeln 7 gefördert.

Hier trifft der Kühlstrom 26 auf integral mit dem Schaufelfuß 8 ausgeführte Vorkragungen 30, 31, die in axialer Richtung A der Turbinenvorrichtung 1 entgegen einer Strömungsrichtung S von Arbeitsfluid in dem Ringkanal 23 über die Rotorscheibe 4 in diesem Bereich um eine axiale Erstreckung 32 bzw. 33 hinausragen. Die Vorkragungen 30, 31 weisen jeweils einen Einlass 34 bzw. 35 mit einer Einlassöffnung 36 bzw. 37 auf, über die dem jeweiligen Kühlluftzuführkanal 20 bzw. 21 Kühlluft aus dem Sekundärstrom zuführbar und von dem aus die Kühlluft über die radial nach außen hin abzweigenden Kühlkanäle 16, 17, 18 zu den Filmkühlungsbohrungen bzw. Austrittsöffnungen geführt wird.

Bei der gezeigten Ausführung weisen Vorkragungen 30, 31 dabei in der Draufsicht in radialer Richtung R der Turbinenvorrichtung 1 eine der Schaufelfußgeometrie folgende, hier aufgrund des tannenbaumförmigen Profils spannungsoptmiert im Wesentlichen dreieckige Form auf, wobei die Vorkragungen 30, 31 in Umfangsrichtung U der Turbinenvorrichtung 1 einen im Wesentlichen tangentialen Verlauf zu der Rotorscheibe 4 aufweisen, so dass in diesem Bereich möglichst geringe verlustbehaftete Verwirbelungen auftreten.

Wie an der jeweiligen Richtung der Pfeile 26 des Kühlluftstroms zu erkennen ist, weist der Kühlluftstrom zu den Kühlluftzuführkanälen 20, 21 hin einen negativen Drall bezogen auf die mit Pfeil ω gezeigte Drehrichtung des Turbinenlaufrades 3 auf. Die negative Drallströmung hat vor Eintritt in die Turbinenschaufeln 4 beispielsweise eine Drallzahl von annähernd 0,5 im Absolutsystem, wodurch bei herkömmlichen Ausführungen aufgrund der Strömungsrichtung entgegengesetzt zur Rotationsrichtung w der Rotorscheibe 4 und der drallbedingten Querströmung beträchtliche Kühlluftdruckverluste im Bereich von Einlässen in Kühlluftzuführkanäle und mithin im gesamten Laufschaufelkühlsystem auftreten würden.

Um derartige Verluste zu reduzieren bzw. zu vermeiden weist eine Mittelachse 38 bzw. 40 der Einlässe 34 und 35 im Bereich der Einlassöffnungen 36 und 37 jeweils eine Erstreckungskomponente in Rotationsrichtung ω der Rotorscheibe 4 auf und ist insgesamt jeweils um einen Winkel α gegenüber der axialen Richtung A der Turbinenvorrichtung 1 geneigt, so dass die Mittelachsen 38 bzw. 40 im Bereich eines Eintritts des einen Drall aufweisenden Kühlluftstromes 26 in den jeweiligen Einlass 34, 35 wenigstens annähernd gleichgerichtet zu der relativen Kühlluftanströmrichtung ist, welche in Umfangsrichtung der Rotorscheibe 4 entgegengesetzt zu deren Rotationsrichtung w verläuft. Verluste könnten ergänzend über eine vorteilhafte Platzierung der statischen Vordralldüse 22 reduziert werden.

Die Einlässe 34, 35 sind im Bereich der Vorkragungen 30, 31 derart horizonal gekrümmt ausgebildet, dass die Mittelachsen 38, 40 nach der Krümmung im Wesentlichen entlang der axialen Ausrichtung des Schaufelfußes 8 ausgerichtet sind.

Die Einlassöffnungen 36, 37 weisen vorliegend eine im Wesentlichen elliptische oder ovale Form auf, können aber prinzipiell beliebig, insbesondere abgerundet, gestaltet werden.

Grundsätzlich können die anströmseitigen Kanten der Einlassöffnungen 36 strömungstechnisch vorteilhaft mit einer Fase oder einem Radius ausgebildet sein.

Auch die Länge der axialen Erstreckungen 32, 33 der Vorkragungen 30, 31 kann je nach Anwendungsfall gewählt werden, wobei durch eine geringe axiale Erstreckung bzw. Länge 32, 33 der Vorkragungen 30, 31 grundsätzlich ein Verlust in Form von Verwirbelungen minimierbar ist und andererseits durch eine große axiale Erstreckung 32, 33 eine hinsichtlich der Umlenkung des Kühlluftstrom 26 optimierte Ausführung erzielbar ist. Weiterhin ist auch der Winkel α je nach Anwendungsfall variierbar.

Bei der Ausführung gemäß Fig. 1 bis Fig. 3 weist die Vorkragung 30 einen sich in radialer Richtung R der Turbinenvorrichtung 1 nach innen erstreckenden Absatz 39 auf, durch welchen eine Bewegung der Turbinenschaufel 7 in axialer Richtung A der Turbinenvorrichtung 1 verhindert ist. Hierdurch kann vorteilhafterweise auf eine aufwändige Einfräsung im Bereich der Rotorscheibe 4 verzichtet werden, um eine axiale Sicherung der Turbinenschaufel 7 gegen die Rotorscheibe 4 zu gewährleisten.

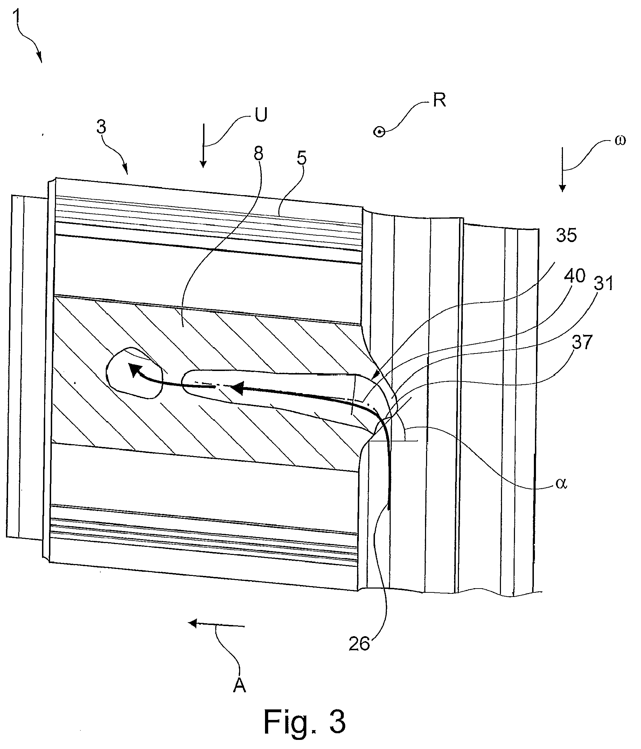

Die Einlässe 34, 35 können im Bereich der Vorkragungen 30, 31 durch eine sich jeweils in Strömungsrichtung wie ein Diffusor erweiternde Kanalgeometrie eine Art Mikrokompressor bilden. Wie insbesondere in Fig. 3 ersichtlich ist, lenken die Vorkragungen 30 und 31 den darin geführten Kühlluftstrom 26 um, wobei sich der Kühlluftstrom verlangsamt und damit der Druck erhöht wird. Der Kühlluftstrom 26, welcher nach der Durchströmung der Vordralldüse 22 und der Dichteinrichtung 14 am Scheibenkranz bei der Einströmung radial nach außen und in Umfangsrichtung

U in Drehrichtung ω eine Relativgeschwindigkeit von beispielsweise 200 m/s aufweisen kann, erfährt in den entsprechend aerodynamisch ausgelegten, sich im Kanalquerschnitt erweiternden Vorkragungen eine Druckerhöhung, was in einem signifikanten Kühlstromstaudruckgewinn bei Austritt aus der Vorkragung bzw. Übergang in den axial geraden Kanalbereich des Kühlluftzuführkanals 20, 21 resultiert. Dieser zusätzlich gewonnene Druck kann dazu genutzt werden, die Turbinenschaufel effizienter zu kühlen als mit herkömmlichen Systemen.

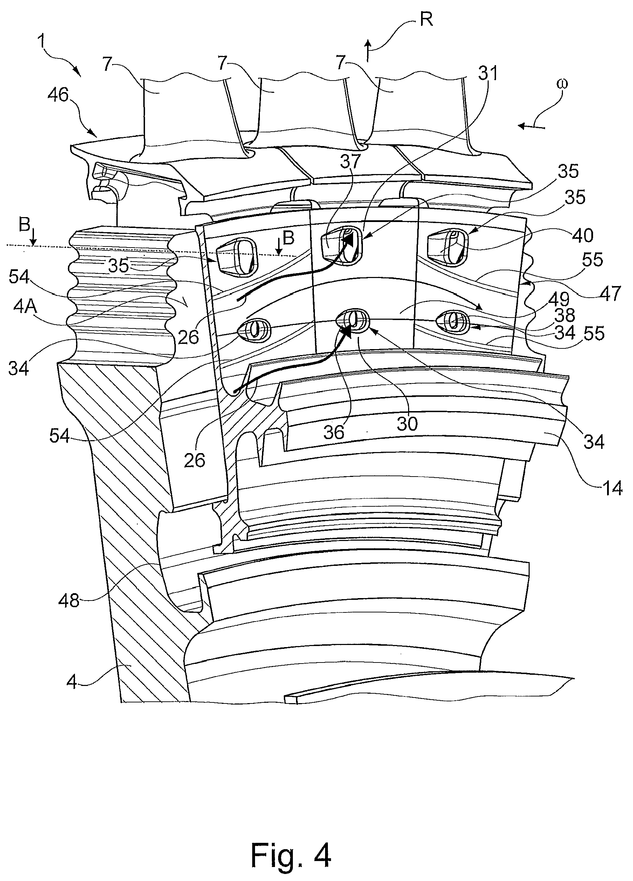

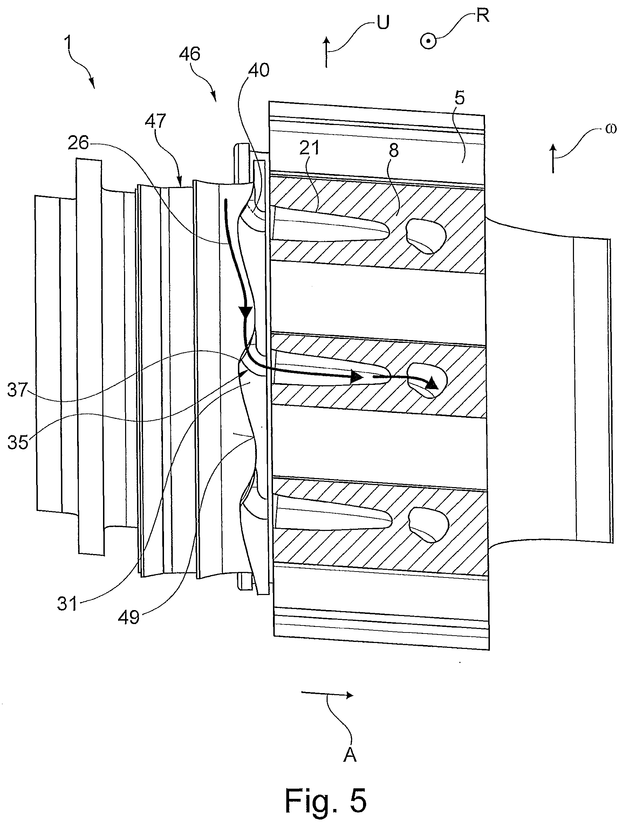

Die Fig. 4 und Fig. 5 zeigen eine alternative Ausführung eines Turbinenlaufrads 46, wobei im Folgenden lediglich auf die Unterschiede gegenüber dem Turbinenlaufrad 3 gemäß Fig. 1 bis Fig. 3 eingegangen wird.

Das Turbinenlaufrad 46 ist mit einer Scheibeneinrichtung 47 bzw. Abdeckplatte ausgeführt, welche die Einlässe 34, 35 mit den Vorkragungen 30, 31 aufweist und als in Umfangsrichtung U der Turbinenvorrichtung 1 vollständig umlaufender Ring und somit als Vollring bzw. "Rim Coverplate" ausgebildet ist, die sich an der Rotorscheibe 4 radial abstützt. Die Scheibeneinrichtung 47 weist neben den Vorkragungen 30, 31 sämtlicher Turbinenschaufeln 7 auch das Zwischenstufendichtelement 14 auf und ist im Bereich einer Nut 48 der Rotorscheibe 4 an dieser gehalten. Die Anströmseite bzw. Vorderseite 8A der Schaufelfüße 8 liegt dabei im Wesentlichen in einer Ebene mit einer Anströmseite 4A der Rotorscheibe 4 in diesem Bereich. Zudem sind die Scheibeneinrichtung 47 und die Turbinenschaufeln 7, wie in Fig. 5 näher ersichtlich, an einander zugewandten Seiten mit ihren Kontaktflächen jeweils plan ausgeführt.

Ein Profil 49 der Scheibeneinrichtung 47 auf einer den Turbinenschaufeln 7 abgewandten Seite ist dabei derart gewählt, dass in diesem Bereich in Umfangsrichtung U der Turbinenvorrichtung 1 möglichst geringe Strömungsverluste auftreten und die Kühlluft den Einlässen 34 und 35 in gewünschtem Umfang zugeführt wird. Hierzu ist das Profil 49 in Umfangsrichtung U der Turbinenvorrichtung 1 zwischen benachbarten Einlässen 34 bzw. 35 wellenartig ausgeführt. Um eine Strömungsführung zwischen den Einlässen 34 bzw. 35 in gewünschtem Umfang beeinflussen zu können, können in diesem Bereich Nuten 54 oder Stege 55 vorgesehen sein, wie dies exemplarisch in Fig. 4 gezeigt ist. Die Form, die Orientierung und die Lage der Nuten 54 und Stege 55 sind dabei je nach Anforderung variierbar.

Bei dieser Ausführung sind aufgrund der vorteilhafterweise großen Anströmfläche Verwirbelungen reduziert, wobei eine große Gestaltungsfreiheit, insbesondere bezüglich der Anordnung der Einlässe 34, 35 vorliegt. Mittels der Scheibeneinrichtung 47 ist zusätzlich ein günstige Abdichtung zwischen den Turbinenschaufeln 7 und der Rotorscheibe 4 erzielt, so dass ein Kühlluftverbrauch über Leckagen reduziert und damit der Turbinenwirkungsgrad erhöht wird. Zudem können die Turbinenschaufeln 7 vorteilhafterweise mit geringerem Gewicht gegenüber der Ausführungsvariante nach Fig. 1 bis Fig. 3 ausgeführt werden, wodurch eine Lasteinwirkung im Bereich der Schaufelfüße 8 mit daraus folgenden Vorteilen für die gewichtsoptimierte Gestaltung und/oder die Lebensdauer reduziert ist.

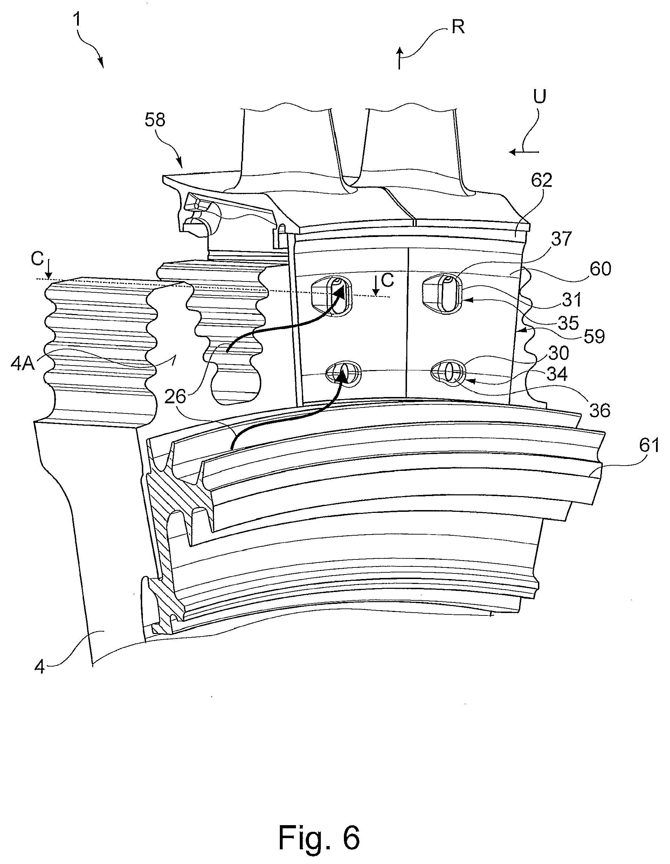

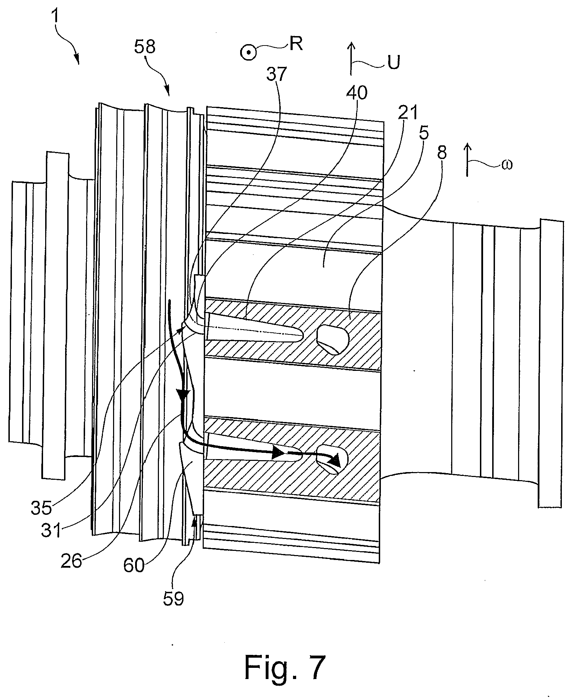

Eine weitere Ausführungsform eines Turbinenlaufrads 58 ist in Fig. 6 bis Fig. 8 gezeigt, wobei im Folgenden lediglich die Unterschiede des Turbinenlaufrads 58 gegenüber dem Turbinenlaufrad 46 beschrieben werden.

Das Turbinenlaufrad 58 weist wiederum eine Scheibeneinrichtung 59 auf, die allerdings in Umfangsrichtung U der Turbinenvorrichtung 1 mehrteilig segmentiert ausgeführt ist. In Fig. 6 ist ein Segment 60 der Scheibeneinrichtung 59 gezeigt, an welches sich in montiertem Zustand in Umfangsrichtung U der Turbinenvorrichtung 1 in beiden Richtungen insbesondere baugleich ausgeführte und in Fig. 6 nicht näher gezeigte Segmente 60 anschließen. Sämtliche Segmente 60 bilden dabei in montiertem Zustand einen komplett umlaufenden segmentierten Scheibenring.

Das Segment 60 weist gemäß der Darstellung nach Fig. 6 in Umfangsrichtung U der Turbinenvorrichtung 1 eine der Erstreckung von zwei Turbinenschaufeln 7 entsprechende Erstreckung auf, wobei das Segment bei einer alternativen Ausführung der Erfindung auch lediglich eine Erstreckung einer Turbinenschaufel, mehreren Turbinenschaufeln oder von Zwischenwerten aufweisen kann. Eine Abstützung und Ausgestaltung der einzelnen Segmente 60 wird dabei je nach vorliegender Geometrie der Turbinenschaufeln 7 und der Rotorscheibe 4, den vorliegenden Belastungen sowie Leckageanforderungen gewählt.

Hinsichtlich der Ausführung der Segmente 60 auf einer den Laufschaufeln 7 abgewandten und auf einer den Laufschaufeln 7 zugewandten Seite wird auf die Ausführung der Scheibeneinrichtung 47 verwiesen. Im Unterschied zu der Scheibeneinrichtung 47 ist bei der Ausführung gemäß Fig. 6 bis Fig. 8 allerdings ein separates Bauteil 61 als "Rim Coverplate" vorgesehen, welches einen Rotorteil der Dichteinrichtung 14 umfassen kann. Über einen in radialer Richtung R der Turbinenvorrichtung 1 nach innen gewandten Absatz 64 wirkt das Segment 60 mit dem Bauteil 61 zusammen.

Zudem weist das Segment 60 gemäß Fig. 8 einen sich in radialer Richtung R der Turbinenvorrichtung 1 nach außen erstreckenden Absatz 62 auf, über den das Segment 60 in einer Nut 63 der Turbinenschaufeln 7 gelagert ist. Die Sicherung der Segmente gegen Rotation relativ zu den Turbinenschaufeln bzw. zur Rotorscheibe 4 erfolgt dabei zweckmäßig über Formschluss zwischen Scheibe und Schaufel mittels Vorkragungen und Taschen.

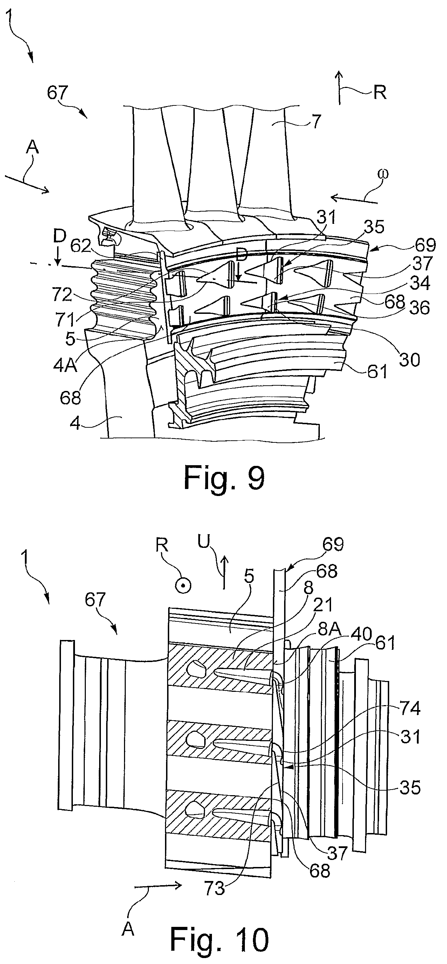

Eine weitere Ausführung eines Turbinenlaufrads 67 ist in Fig. 9 und Fig. 10 gezeigt, wobei in der folgenden Beschreibung im Wesentlichen die Unterschiede zu dem Turbinenlaufrad 58 aufgezeigt werden.

In den Fig. 9 und Fig. 10 ist wiederum eine mit Segmenten 68 ausgeführte Scheibeneinrichtung 69 ersichtlich, wobei sich die Segmente 68 in Umfangsrichtung U der Turbinenvorrichtung 1 vorliegend über zwei Turbinenschaufeln 7 erstrecken. Bei dieser Ausführung ist sowohl eine den Schaufelfüßen 8 zugewandte als auch eine angeströmte, den Schaufelfüßen 8 abgewandte Seite der Segmente 68 planar ausgeführt, wobei die Vorkragungen 30, 31 mit den Einlässen 34, 35 durch die Segmente 68 gebildet werden. Weiterhin ist in Fig. 9 und Fig. 10 ersichtlich, dass einige Einlässe 34, 35 an einem Segment 68 und andere Einlässe 34, 35 an zwei in Umfangsrichtung U der Turbinenvorrichtung 1 benachbarten Segmenten 68 ausgebildet sind.

Die Einlässe 34, 35 sind hier jeweils in der Art eines NACA-Einlaufs, eines sogenannten NACA-Inlet-Duct bzw. "submerged inlet", ausgeführt, der durch sehr geringe Strömungsverluste in Umfangsrichtung U der Turbinenvorrichtung 1 gekennzeichnet ist. Zudem wird bei einer derartigen Ausführung die Kühlluft 26 den Einlässen 34, 35 optimiert zugeführt bzw. durch diese eingesaugt. Die Einlässe 34, 35 weisen in der Seitenansicht vorliegend im Wesentlichen eine dreieckige Form auf, wobei deren Flanken 71, 72 gerade mit einem Winkel zueinander und/oder gekrümmt ausgeführt sein können.

In Fig. 10 ist ersichtlich, dass eine in Drehrichtung ω weisende Flanke 73 der Einlässe 34, 35 im Wesentlichen gerade ausgeführt ist, so dass hierdurch ein rampenförmiger Bereich gebildet wird. Eine weitere Flanke 74 entgegen der Drehrichtung ω ist dagegen verkürzt und mit einem Radius ausgebildet. Zudem ist in Fig. 10 ersichtlich, dass ein Querschnitt des Einlasses 34, 35 in einem an den Schaufelfuß 8 grenzenden Bereich des Segments 68 kleiner als ein Querschnitt des Kühlluftzuführkanals 21 in einem an das Segment 68 grenzenden Bereich ist, so dass hier eine sprunghafte Querschnittserweiterung vorliegt. Eine derartige sprunghafte Querschnittserweiterung ist in analoger Weise auch bei sämtlichen oben beschriebenen Turbinenlaufrädern 3, 46 und 58 einsetzbar, um toleranzbedingten Abweichungen von Scheibeneinrichtung 47, Rotorscheibe 4 und Turbinenschaufel 7 vorzuwirken.

Auch bei dieser Ausführung können im Bereich der den Vorderseiten der Schaufelfüße 8 abgewandten Seite der Segmente 68 beispielsweise Nuten und/oder Stege vorgesehen sein, um eine Strömungsführung in gewünschtem Umfang zu gestalten.

Neben der Anordnung der Einlässe 34, 35 in Segmenten 68 kann es bei einer alternativen Ausführung der Erfindung auch vorgesehen sein, dass die Scheibeneinrichtung als Vollring ausgeführt ist.

### Bezugszeichenliste

- 1: Turbinenvorrichtung
- 2: Turbinenleitrad
- 3: Turbinenlaufrad
- 4: Rotorscheibe
- 4A: Anströmseite Rotorscheibe
- 5: Scheibenfinger
- 6: Scheibenfingernut
- 7: Turbinenschaufel
- 8: Schaufelfuß
- 8A: Anströmseite Schaufelfuß
- 9: tannenbaumförmiges Profil
- 10: Schaufelhals
- 11: Schaufelplattform
- 12: Schaufelprofil
- 13: Sicherungseinrichtung
- 14: Dichteinrichtung
- 15: Kühleinrichtung
- 16, 17, 18: Kühlkanal
- 20, 21: Kühlluftzuführkanal
- 22: Vordralldüse
- 23: Ringkanal
- 24: Leitschaufel
- 26: Kühlluftstrom
- 30, 31: Vorkragung
- 32, 33: axiale Erstreckung Vorkragung
- 34, 35: Einlass
- 36, 37: Einlassöffnung
- 38: Mittelachse
- 39: Absatz
- 40: Mittelachse
- 41: Sicherungssegment
- 42: Dichtelement
- 43: Sprengring
- 46: Turbinenlaufrad
- 47: Scheibeneinrichtung
- 48: Nut Rotorscheibe
- 49: Profil Scheibeneinrichtung
- 54: Nut
- 55: Steg
- 58: Turbinenlaufrad
- 59: Scheibeneinrichtung
- 60: Segment
- 61: Bauteil
- 62: Absatz Scheibeneinrichtung
- 63: Nut Turbinenschaufel
- 64: Absatz Scheibeneinrichtung
- 67: Turbinenlaufrad
- 68: Segment
- 69: Scheibeneinrichtung
- 71 bis 74: Flanke
- α: Winkel
- A: axiale Richtung
- R: radiale Richtung
- S: Hauptströmungsrichtung
- U: Umfangsrichtung
- w: Rotationsrichtung Rotorscheibe

## Patentansprüche

1. Gekühltes Turbinenlaufrad (3, 46, 58, 67) für eine Gasturbine, insbesondere ein Flugtriebwerk, mit an einer Umfangsfläche einer Rotorscheibe (4) radial angeordneten Turbinenschaufeln (7), wobei jeweils eine Turbinenschaufel (7) mit einem profilierten Schaufelfuß (8) in eine korrespondierend profilierte Scheibenfingernut (6) an der Umfangsfläche der Rotorscheibe (4) eingesetzt ist, und wobei eine Kühleinrichtung (15) mit mindestens einem sich zumindest im Wesentlichen axial und wenigstens über einen Teil der axialen Länge des Schaufelfußes (8) erstreckenden Kühlluftzuführkanal (20, 21) vorgesehen ist, welcher wenigstens einen Einlass (34, 35) an einer Anströmseite (8A) des Schaufelfußes (8) mit einer Einlassöffnung (36, 37) aufweist, wobei der Einlass (34, 35) mit einer Vorkragung (30, 31) ausgeführt ist, **dadurch gekennzeichnet, dass** eine Mittelachse (38, 40) des Einlasses (34, 35) in einer der Einlassöffnung (36, 37) zugewandten Richtung im Bereich der Einlassöffnung (36, 37) eine Erstreckungskomponente in Rotationsrichtung (ω) der Rotorscheibe (4) aufweist.

2. Turbinenlaufrad nach Anspruch 1, **dadurch gekennzeichnet, dass** die Vorkragung (30, 31) an einer in Strömungsrichtung (S) dem Schaufelfuß (8) vorgesetzten Scheibeneinrichtung (47, 59, 69) ausgebildet ist, die insbesondere in Anlage an dem Schaufelfuß (8) gehalten ist.

3. Turbinenlaufrad nach Anspruch 1 oder 2, **dadurch gekennzeichnet, dass** die Scheibeneinrichtung (47) als eine einen vollen Ring bildende Abdeckplatte ausgeführt ist.

4. Turbinenlaufrad nach Anspruch 1 oder 2, **dadurch gekennzeichnet, dass** die Scheibeneinrichtung (59, 69) in Umfangsrichtung (U) mit mehreren Segmenten (60, 68) ausgeführt ist, wobei jedem Segment (60, 68) wenigstens eine Turbinenschaufel (7) zugeordnet ist.

5. Turbinenlaufrad nach Anspruch 4, **dadurch gekennzeichnet, dass** die Segmente (60, 68) in montiertem Zustand einen Scheibenring bilden.

6. Turbinenlaufrad nach einem der Ansprüche 1 bis 5, **dadurch gekennzeichnet, dass** die Scheibeneinrichtung (47, 59, 69) mehrere einer Turbinenschaufel (7) zugeordnete Einlässe (34, 35) aufweist.

7. Turbinenlaufrad nach einem der Ansprüche 1 bis 6, **dadurch gekennzeichnet, dass** von dem im Wesentlichen axialen Kühlluftzuführkanal (20, 21) mindestens ein sich im Inneren der Turbinenschaufel (7) bis zu einer Austrittsöffnung (19) an deren Oberfläche erstreckender Kühlkanal (16, 17, 18) abzweigt, wobei insbesondere wenigstens zwei Kühlkanäle (17, 18) mit einem Einlass (35) verbunden sind.

8. Turbinenlaufrad nach einem der Ansprüche 4 bis 7, **dadurch gekennzeichnet, dass** ein Segment (60, 68) der Scheibeneinrichtung (59, 69) mehrere Einlässe (34 bzw. 35) benachbarter Turbinenschaufeln (7) aufweist.

9. Turbinenlaufrad nach einem der Ansprüche 1 bis 8, **dadurch gekennzeichnet, dass** die Scheibeneinrichtung (47) integral mit einer Dichteinrichtung (14) ausgeführt ist, welche im Einbauzustand zwischen in axialer Richtung benachbarten Turbinenleit- und Turbinenlaufrädern (2, 3) angeordnet ist.

10. Turbinenlaufrad nach einem der Ansprüche 1 bis 9, **dadurch gekennzeichnet, dass** einander zugewandte Seiten der Scheibeneinrichtung (47, 59, 69) und der Turbinenschaufel (7) jeweils plan ausgeführt sind.

11. Turbinenlaufrad nach einem der Ansprüche 1 bis 10, **dadurch gekennzeichnet, dass** der Einlass (34, 35) im Bereich der Vorkragung (30, 31) horizontal gekrümmt ausgebildet ist, wobei eine Mittelachse (38, 40) im Bereich des Einlasses (34, 35) eines einen Drall aufweisenden Kühlluftstromes (26) wenigstens annähernd gleichgerichtet zu der Kühlluftanströmrichtung ist und nach der Krümmung im Wesentlichen in Axialerstreckung des Kühlluftzuführkanals (20, 21) ausgerichtet ist.

12. Turbinenlaufrad nach einem der Ansprüche 1 bis 11, **dadurch gekennzeichnet, dass** der Einlass (34, 35) im Bereich der Vorkragung (30, 31) NACA-förmig ausgebildet ist.

13. Turbinenlaufrad nach einem der Ansprüche 1 bis 12, **dadurch gekennzeichnet, dass** der Einlass (34, 35) im Bereich der Vorkragung (30, 31) eine sich in Strömungsrichtung diffusorartig erweiternde Kanalquerschnittsfläche aufweist.

14. Turbinenlaufrad nach einem der Ansprüche 1 bis 13, **dadurch gekennzeichnet, dass** die Scheibeneinrichtung (47, 59, 69) zwischen zwei in Umfangsrichtung (U) beabstandeten Einlässen (34 bzw. 35) auf ihrer dem Schaufelfuß (8) abgewandten Seite ein die benachbarten Kanten (51, 52) der Einlässe (34 bzw. 35) insbesondere wellenartig verbindendes Profil (49) aufweist.

15. Turbinenlaufrad nach einem der Ansprüche 1 bis 14, **dadurch gekennzeichnet, dass** die Scheibeneinrichtung (47, 59, 69) wenigstens einen in radialer Richtung (R) vorstehenden Absatz (39, 62) aufweist, mittels welchem wenigstens eine Turbinenschaufel (7) in axialer Richtung (A) an der Rotorscheibe (4) gesichert ist.
